# EUROPÄISCHE PATENTANMELDUNG

(11) **EP 4 560 946 A1**
(43) Veröffentlichungstag der Anmeldung: **28.05.2025**
(21) Anmeldenummer: 23211223.5
(22) Anmeldetag: 21.11.2023
(51) Int. Cl.: H04L 1/00, H04L 1/06

(54) **HARDWARE BASIERTE ABSICHERUNG EINER DATENÜBERTRAGUNG IM AUTOMOBIL ZUM SENDEN VON DATEN ÜBER MEHRERE KANÄLE**

(71) Anmelder: INOVA Semiconductors GmbH, 81671 München (DE)
(72) Erfinder: Neumann, Roland, Bad Tölz (DE); Kluge, Fabian, Perasdorf (DE)
(74) Vertreter: Reich, Jochen

(57) **Zusammenfassung**

Die vorliegende Erfindung ist auf eine Systemanordnung gerichtet, welche Ersatzdaten erzeugt, die verwendet werden können, wenn übersendete Daten negativ verifiziert werden, das heißt wenn diese als fehlerhaft erkannt werden. Erfindungsgemäß werden getrennte physische Kanäle vorgesehen und Daten an besonders geeigneter Stelle repliziert, redundant übermittelt und entsprechend kodiert. In der speziellen Merkmalskombination werden diverse Sicherheitsmechanismen integriert und synergetisch derart verknüpft, dass eine besonders sichere Datenübertragung im Automobil gewährleistet wird. Die vorliegende Erfindung geht hier speziell auf die Sicherheitsanforderungen und Hardwarebedingungen im ein, was beispielsweise bei einer paketvermittelten Kommunikation nicht gegeben ist. Getrennte physische Kanäle ermöglichen es, dass Daten nach dem erfindungsgemäß vorgeschlagenem Schema redundant übertragen werden können, wobei Wechselwirkungen zwischen den Übertragungsmedien unterbunden werden. Die Kodierung ermöglicht es, dass empfängerseitig erkannt werden kann, dass gegebenenfalls ein Fehler bezüglich der Datenintegrität vorliegt beziehungsweise, dass Daten falsch oder nicht übermittelt wurden. Wird dies erkannt, so kann empfängerseitig auf die redundant übermittelten Daten zurückgegriffen werden und die Datenübertragung wird insgesamt nicht beeinträchtigt. Die vorliegende Erfindung ist ferner auf ein entsprechend eingerichtetes Verfahren gerichtet, welches es ermöglicht, die Systemanordnung bereitzustellen beziehungsweise diese zu betreiben. Darüber hinaus wird ein Computerprogrammprodukt vorgeschlagen, mit Steuerbefehlen, die das Verfahren ausführen beziehungsweise die Systemanordnung bereitstellen oder betreiben.

## Beschreibung

Die vorliegende Erfindung ist auf eine Systemanordnung gerichtet, welche Ersatzdaten erzeugt, die verwendet werden können, wenn übersendete Daten negativ verifiziert werden, das heißt wenn diese als fehlerhaft erkannt werden. Erfindungsgemäß werden getrennte physische Kanäle vorgesehen und Daten an besonders geeigneter Stelle repliziert, redundant übermittelt und entsprechend kodiert. In der speziellen Merkmalskombination werden diverse Sicherheitsmechanismen integriert und synergetisch derart verknüpft, dass eine besonders sichere Datenübertragung im Automobil gewährleistet wird. Die vorliegende Erfindung geht hier speziell auf die Sicherheitsanforderungen und Hardwarebedingungen im ein, was beispielsweise bei einer paketvermittelten Kommunikation nicht gegeben ist. Getrennte physische Kanäle ermöglichen es, dass Daten nach dem erfindungsgemäß vorgeschlagenem Schema redundant übertragen werden können, wobei Wechselwirkungen zwischen den Übertragungsmedien unterbunden werden. Die Kodierung ermöglicht es, dass empfängerseitig erkannt werden kann, dass gegebenenfalls ein Fehler bezüglich der Datenintegrität vorliegt beziehungsweise, dass Daten falsch oder nicht übermittelt wurden. Wird dies erkannt, so kann empfängerseitig auf die redundant übermittelten Daten zurückgegriffen werden und die Datenübertragung wird insgesamt nicht beeinträchtigt. Die vorliegende Erfindung ist ferner auf ein entsprechend eingerichtetes Verfahren gerichtet, welches es ermöglicht, die Systemanordnung bereitzustellen beziehungsweise diese zu betreiben. Darüber hinaus wird ein Computerprogrammprodukt vorgeschlagen, mit Steuerbefehlen, die das Verfahren ausführen beziehungsweise die Systemanordnung bereitstellen oder betreiben.

Typischerweise erfolgt im Automobil keine paketvermittelte Übertragung von Daten, sondern vielmehr sind Komponenten fest verschaltet beziehungsweise hart kodiert und es erfolgt somit keine dynamische Vermittlung von Paketen beziehungsweise es kann eine sequenzielle beziehungsweise serielle Datenkommunikation durchgeführt werden. Im Automobil gelten ganz besonders strenge Voraussetzungen an die Datenintegrität und es muss zu jeder Zeit sichergestellt werden, dass übersendete Daten empfängerseitig auch vollständig und korrekt empfangen werden. Im Automobil werden typischerweise Sicherheitsfunktionen implementiert, die besonders ausfallsicher und verlässlich sein müssen. Eine weitere Anforderung im Automobil ist es, dass ein möglichst geringer technischer Aufwand betrieben werden muss beziehungsweise auch Gewicht eingespart werden muss. Gerade in der Elektromobilität wirkt sich ein erhöhter Energiebedarf auf die Reichweite aus, was in jedem Fall zu vermeiden ist. Darüber hinaus können im Automobil keine herkömmlichen Techniken der paketvermittelten Übertragung Einsatz finden, da diese oftmals Latenzzeitanforderungen nicht entsprechen beziehungsweise für eine dynamische und paketvermittelte Übertragung zu viel Aufwand erforderlich ist. Der Aufwand besteht unter anderem darin Komponenten bereitzustellen, welche einen dynamischen Datenpfad auswählen, was so im Automobil nicht notwendig ist.

Der Stand der Technik kennt ein Schichtenmodell als eine hierarchische Organisationsstruktur. Es dient dazu, komplexe Systeme in überschaubare Schichten oder Ebenen zu unterteilen, wobei jede Schicht spezifische Aufgaben und Verantwortlichkeiten hat. Diese Schichten arbeiten zusammen, um die Gesamtfunktionalität des Systems zu ermöglichen. Ein Beispiel aus dem Stand der Technik eines Schichtenmodells ist das OSI-Modell (Open Systems Interconnection), das in der paketvermittelten Netzwerktechnologie verwendet wird. Es besteht aus sieben Schichten, wobei jede Schicht bestimmte Aufgaben im Zusammenhang mit der Kommunikation zwischen Computern und Geräten ausführt. Die Schichten reichen von der physischen Verbindungsebene bis zur Anwendungsebene, wobei jede Ebene auf die Dienste der darunterliegenden Ebene aufbaut.

Bekannt ist es aus dem Stand der Technik, Daten, die potenziell fehlerhaft übertragen werden redundant zu übermitteln. Diese Redundanzen schaffen ebenso Ersatzdaten, wobei es sich im Stand der Technik negativ auswirkt, dass es möglich ist, dass die Daten bereits vor einem Replizieren verfälscht sind. Auf diese Art und Weise werden Ersatzdaten geschaffen, die eben redundant aber dennoch fehlerbehaftet vorliegen. Dies schafft den Nachteil, dass großer technischer Aufwand betrieben wird, der darin besteht, dass die Daten repliziert werden müssen und eine entsprechende Netzwerkauslastung entsteht, ohne dass dies einen Mehrwert bringt. Somit stellen herkömmliche Verfahren nicht auf die zugrundeliegende Architektur beziehungsweise die Anwendungsdomäne ab und es wird fälschlicherweise davon ausgegangen, dass korrekte Daten vorliegen, obwohl auch die redundanten Daten fehlerbehaftet sind. Auf diese Art und Weise wird im Stand der Technik ein vermeintlich verlässliches Verfahren geschaffen, welches jedoch nach wie vor falsche Daten liefert.

Datenintegrität bezieht sich allgemein auf die Genauigkeit, Zuverlässigkeit und Konsistenz von Daten in einem Informationssystem oder einer Datenbank. Sie stellt sicher, dass die Daten während ihrer Speicherung, Übertragung und Verarbeitung korrekt bleiben und nicht unbeabsichtigt oder bösartig verändert werden. Die Gewährleistung der Datenintegrität ist entscheidend, um sicherzustellen, dass Informationen vertrauenswürdig und nützlich sind, insbesondere in sicherheitskritischen Anwendungen wie dem Automobil.

Ferner ist aus dem Stand der Technik die sogenannte Vorwärtsfehlerkorrektur bekannt. Forward Error Correction (FEC) ist eine Methode zur Fehlerkorrektur, bei der zusätzliche Redundanzinformationen zu den Daten hinzugefügt werden. Diese Redundanz ermöglicht es dem Empfänger, Fehler zu erkennen und zu korrigieren, ohne dass das Paket erneut gesendet werden muss. FEC wird oft in Hochgeschwindigkeits-Ethernet-Verbindungen wie 10 Gigabit Ethernet (10GbE) eingesetzt, um die Datenintegrität sicherzustellen.

Fehlerkorrekturmechanismen spielen eine entscheidende Rolle bei der Gewährleistung einer zuverlässigen Datenübertragung in Netzwerken. Sie helfen, Übertragungsfehler zu erkennen, zu isolieren und zu korrigieren, um sicherzustellen, dass die Datenintegrität erhalten bleibt. Insbesondere in geschäftskritischen Umgebungen, in denen große Datenmengen übertragen werden, sind Fehlerkorrekturmechanismen unerlässlich, um die Qualität der Verbindung aufrechtzuerhalten.

Darüber hinaus ist es aus dem Stand der Technik generell bekannt, dass eine Datenübertragung über einen seriellen Datenkanal typischerweise fehlerbehaftet ist. Um diesem Problem zu begegnen, kennt der Stand der Technik unterschiedliche Kodierungen, wie zum Beispiel ein Line Coding. Dies wird auch als eine Leitungskodierung bezeichnet.

Der Stand der Technik erkennt das Problem der fehlerhaften Datenübertragung über einen seriellen Kommunikationslink und sieht hierbei vor, dass die leitungskodierten Daten mit einer Vorwärtsfehlerkorrektur versehen werden. Der Stand der Technik begegnet also dem Problem der Fehlerkorrektur dadurch, dass leitungskodierte Daten mit einem nichtleitungskodiertem Zusatz versehen werden, nämlich der Vorwärtsfehlerkorrektur, welche wiederum nicht leitungskodiert ist. Somit besteht also im Stand der Technik das Problem, dass selbst falls eine Leitungskodierung vorgesehen ist, einzelne Metadaten nicht kodiert übertragen werden und somit eben nicht die Vorteile der Leitungskodierung von allen übertragenen Daten genutzt werden können. Dies stellt wiederum eine Fehlerquelle dar. Der Stand der Technik behilft sich teilweise damit, dass sodann die Vorwärtsfehlerkorrekturdaten gesondert leitungskodiert werden und danach übertragen werden. Somit entsteht ein additiver Aufwand und um die leitungskodierten Vorwärtsfehlerkorrekturdaten abzusichern müsste hierüber eine neue Vorwärtsfehlerkorrektur berechnet werden. Dies schafft wiederum zusätzlichen Aufwand und schafft zudem wiederum eine nicht leitungskodierten Vorwärtsfehlerkorrektur.

Generell besteht im Stand der Technik das Problem, dass nicht ausreichend analysiert wird, an welcher Stelle in einer Systemanordnung beziehungsweise an welcher Position in einem Prozess Daten besonders vorteilhaft zu replizieren sind und diese besonders vorteilhaft übertragen werden können. Somit schafft der Stand der Technik also auch bei einer redundanten Datenübertragung keine verlässlichen Verfahren, die sicherstellen, dass die Datenintegrität gewährleistet ist.

Darüber hinaus ist es im Stand der Technik nachteilig, dass ein großer technischer Aufwand bei der Replizierung der Daten und deren Übermittlung geleistet werden muss. Wünschenswert ist hier ein Verfahren beziehungsweise eine Systemanordnung, welche besonders effizient beziehungsweise auf Hardwareebene arbeitet.

Darüber hinaus sind Verfahren aus dem Stand der Technik nicht anwendbar, welche paketbasiert Daten übermitteln, da hier ganz andere Netzwerkarchitekturen zu Grunde liegen, die eine dynamische Paketvermittlung sicherstellen müssen. Somit werden also im Stand der Technik Verfahren geschaffen, die andere Sicherheitsmechanismen benötigen, wie eine sequenzielle beziehungsweise serielle Datenübertragung.

Es ist daher eine Aufgabe der vorliegenden Erfindung eine Systemanordnung zum Bereitstellen von Ersatzdaten speziell in einem Automobil bereitzustellen. Die Systemanordnung soll besonders effizient und dennoch fehlerrobust ausgestaltet sein. Ebenso ist es eine Aufgabe der vorliegenden Erfindung ein entsprechend eingerichtetes Verfahren bereitzustellen beziehungsweise ein Computerprogrammprodukt mit Steuerbefehlen, welche das Verfahren implementieren beziehungsweise die Systemanordnung bereitstellen oder betreiben.

Die Aufgabe wird gelöst mit den Merkmalen des Patentanspruchs 1. Weitere vorteilhafte Ausgestaltungen sind in den Unteransprüchen angegeben.

Demgemäß wird eine Systemanordnung zur Absicherung einer Datenübertragung vorgeschlagen, aufweisend eine Sendevorrichtung eingerichtet zur redundanten Kodierung von ersten Dateneinheiten in eine erste Instanz der ersten Dateneinheiten und eine zweite identische und somit redundante Instanz der ersten Dateneinheiten, und ferner eingerichtet zur Kodierung von zweiten Dateneinheiten, wobei bei allen Kodierungen ein Hinzufügen jeweils einer Vorwärtsfehlerkorrektur erfolgt; und genau zwei physische, getrennte Datenübertragungsmedien, welche die Sendevorrichtung und eine Empfangsvorrichtung kommunikativ koppeln, wobei die Sendevorrichtung eingerichtet ist die erste Instanz der ersten Dateneinheiten über ausschließlich ein Datenübertragungsmedium zu übertragen und die zweite Instanz der ersten Dateneinheiten über ausschließlich das jeweils andere Datenübertragungsmedium zu übertragen und ferner die zweiten kodierten Dateneinheiten über ein wahlweises der beiden Datenübertragungsmedien an die Empfangsvorrichtung zu übertragen.

Vorliegend erfolgt die Absicherung der Datenübertragung über eine Kombination von mehreren Mechanismen, welche synergetisch zusammenwirken. Die zu übertragenden Daten werden mit einer Vorwärtsfehlerkorrektur versehen, welche es ermöglicht, empfängerseitig festzustellen, ob die Daten korrekt empfangen wurden beziehungsweise die Vorwärtsfehlerkorrektur erlaubt es dem Empfänger die Daten zu korrigieren. Bei einer negativen Verifizierung von Daten werden Ersatzdaten verwendet, welche ebenfalls mit einer Vorwärtsfehlerkorrektur versehen sind. Somit lässt sich auch die Integrität dieser Daten überprüfen und wenn die ersten Daten nicht zu verwenden sind, werden eben diese Ersatzdaten verwendet. Darüber hinaus ist es erfindungsgemäß besonders vorteilhaft, dass die ersten Daten über ein erstes Übertragungsmedium gesendet werden und die zweiten Daten über ein zweites, anderes Kommunikationsmedium. Somit wird bewerkstelligt, dass die Daten stets zur gleichen Zeit vorliegen, was die vorliegende Erfindung von einem paketvermittelten Ansatz unterscheidet, und zudem wird auch sichergestellt, dass ein korrekter und funktionsfähiger Übertragungskanal gewählt wird.

Werden die Daten empfängerseitig falsch entgegengenommen und lassen sich diese auch nicht mittels der Vorwärtsfehlerkorrektur korrigieren, so kann dies an diversen Schritten im Übertragungsprozess liegen, wobei erfindungsgemäß sichergestellt wird, dass bei einem defekten Übertragungsmedium die weiteren Daten über ein anderes, gesondertes Übertragungsmedium bereitgestellt werden. Somit werden also Fehler vermieden, welche sich nicht lediglich auf die Verarbeitung der Daten beziehen, sondern insbesondere wird auch sichergestellt, dass mindestens ein funktionsfähiges Übertragungsmedium vorliegt. Lediglich für den Fall, dass beide Übertragungsmedien fehlerbehaftet sind, terminiert das Verfahren. Dieser Fall ist jedoch untypisch und typischerweise kommt es lediglich temporär zu Ausfällen beziehungsweise Beeinträchtigungen des Übertragungsmediums. Somit ist eben sichergestellt, dass im Fehlerfall, welcher aufgrund der Vorwärtsfehlerkorrektur auch tatsächlich erkannt wird, ein redundanter Übertragungskanal bereitsteht, welcher Ersatzdaten überträgt.

Erfindungsgemäß wird also eine mehrfache Absicherung vorgeschlagen, wobei die Daten redundant kodiert werden und die einzelnen Sicherheitsmechanismen wirken derart synergetisch zusammen, dass die Vorwärtsfehlerkorrektur auch dazu dienen kann, einen redundanten Übertragungskanal beziehungsweise ein redundantes Übertragungsmedium auszuwählen. Wird also empfängerseitig erkannt, dass die ersten Daten fehlerhaft sind, so wird mittels des zweiten Datenübertragungsmediums sichergestellt, dass Ersatzdaten vorliegen, welche dann ebenfalls mittels der Vorwärtsfehlerkorrektur verifiziert werden können. Die Kombination dieser Merkmale schafft den Vorteil gegenüber dem Stand der Technik, dass ein robustes Verfahren beziehungsweise eine robuste Systemanordnung geschaffen wird, welche mittels geringem technischen Aufwand bereitgestellt werden kann. Zudem bietet die vorliegende Erfindung die Möglichkeit, die Sicherheitsmechanismen rein hardwarebasiert umzusetzen. So kann das Replizieren der Daten derart erfolgen, dass senderseitig eine Verschaltung vorliegt, die automatisiert die Daten dupliziert beziehungsweise repliziert und dies kann besonders vorteilhaft einfach mit der Verschaltung von Eingangsschnittstellen zu Ausgangsschnittstellen erfolgen. So ist es erfindungsgemäß möglich, dass die Ausgangsschnittstellen in größerer Anzahl vorliegen als die Eingangsschnittstellen. Auf die Art und Weise ist es nicht notwendig mittels Berechnungsschritten die Daten zu replizieren, sondern vielmehr kann dieser Mechanismus hardwareseitig verschaltet werden und ist somit besonders fehlerrobust und ausfallsicher.

Erfindungsgemäß ist eine Sendevorrichtung vorgesehen, welche erste Dateneinheiten und zweite Dateneinheiten entgegennimmt und diese weiterleitet. Hierzu werden die ersten Sendedaten repliziert derart, dass eine erste Instanz dieser Dateneinheiten entsteht und eine zweite, identische Instanz dieser ersten Dateneinheiten. Bei den zweiten Dateneinheiten handelt es sich um Dateneinheiten, welche nicht redundant übertragen werden sollen. Somit kann erfindungsgemäß unterschieden werden in besonders sicherheitskritische Dateneinheiten, nämlich die ersten Dateneinheiten, und Dateneinheiten mit einem normalen Sicherheitserfordernis. Diese können sodann ohne eine Replizierung, also nicht redundant, weitergeleitet werden.

Die Dateneinheiten können an sich weitergeleitet werden beziehungsweise kodiert werden und können insbesondere in beliebige Segmente unterteilt werden. Hierbei kann es sich um einzelne Zellen handeln. Die Dateneinheiten bekommen eine Vorwärtsfehlerkorrektur errechnet, welche es dem Empfänger der Daten ermöglicht, anhand dieser Vorwärtsfehlerkorrektur die Korrektheit der empfangenen Daten zu überprüfen und diese gegebenenfalls zu korrigieren. Somit kann sich die Vorwärtsfehlerkorrektur auf die Dateneinheiten an sich oder aber auch auf einzelne Segmente beziehen. Werden die Dateneinheiten segmentiert, so kann jedes Segment eine Vorwärtsfehlerkorrektur erhalten. Die Dateneinheiten können zudem Rahmendaten aufweisen, wie zum Beispiel Kopfdaten, welche die berechnete Vorwärtsfehlerkorrektur abspeichern. Somit kann ein entsprechendes Format vorgegeben werden.

Bei den getrennten Datenübertragungsmedien kann es sich um einen Kontakt oder ein Kabel handeln. Somit kann das Übertragungsmedium elektrisch, optisch oder als Waveguide vorliegen. Getrennte Datenübertragungsmedien sind generell Medien, welche sich nicht gegenseitig beeinflussen. So ist es vorteilhaft entsprechende Übertragungsmedien elektromagnetisch abzuschirmen und/ oder sicherzustellen, dass bei einem Ausfallen eines ersten Mediums das zweite Medium noch funktionsfähig ist. Somit sollen also die getrennten Übertragungsmedien nicht als ein einziger Kontakt oder ein einziges Kabel vorliegen. Dem widerspricht es nicht, dass beide Übertragungsmedien beispielsweise auf einer gemeinsamen Leiterplatte angeordnet sind. Somit handelt es sich also bei den getrennten Übertragungsmedien als solche nicht um virtuelle Pfade auf dem gleichen Übertragungsmedium. Generell ist es jedoch möglich, auf jedem der Übertragungsmedien virtuelle Pfade zu betreiben.

Um sicherzustellen, dass die Empfängervorrichtung auch bei einem Ausfall beziehungsweise bei einer Beeinträchtigung eines Kanals die Daten ordnungsgemäß empfängt, wird bezüglich der ersten Dateneinheiten die erste Instanz über ein Kommunikationsmedium gesendet und die zweite Instanz, also die gleichen, redundanten Daten über ein zweites Kommunikationsmedium. Empfängerseitig kann mittels des beigefügten Vorwärtsfehlerkorrekturcodes erkannt werden, ob die Daten ordnungsgemäß übertragen werden können. Ist dies nicht der Fall, so kann dies an einer fehlerhaften Datenverarbeitung liegen oder aber die Übertragungskanäle sind beeinträchtigt. Erfindungsgemäß ist es möglich, dass der Fehler nicht weiter gesucht werden muss, dass dieser aber erkannt wird. Folglich versucht die Empfängervorrichtung mittels des übersendeten Vorwärtsfehlerkorrekturcodes die empfangenen Dateneinheiten zu reparieren, was oftmals nicht möglich ist. Dies liegt an den natürlichen Grenzen einer Vorwärtsfehlerkorrektur. Zwar kann generell die Vorwärtsfehlerkorrektur geringere Fehler, zum Beispiel einzelne Bitfehler, reparieren, dies ist jedoch nicht in unbegrenztem Umfang möglich. Ist dies nicht möglich, so ist es besonders vorteilhaft, dass mittels des zweiten Datenübertragungskanals die redundanten Daten, also die zweite Instanz übermittelt werden kann. Dies erfolgt in jedem Fall, da es sich besonders bevorzugt um eine serielle beziehungsweise eine sequenzielle Kommunikation handelt, also keine paketbasierte Kommunikation. Hierbei ist es von Vorteil, dass die erste Instanz und die zweite Instanz der Dateneinheiten möglichst gleichzeitig übermittelt werden, damit sichergestellt ist, dass bei einem Verwerfen der ersten Instanz der Dateneinheiten die zweite Instanz der Dateneinheiten bereits vorliegt.

Nunmehr ist es auch möglich die zweite Instanz der Dateneinheiten mittels des Vorwärtsfehlerkorrekturcodes zu überprüfen und bei einer negativen Verifizierung, also bei einer nicht korrekten Datenübertragung, kann die zweite Instanz mittels des Vorwärtsfehlerkorrekturcodes korrigiert werden. Somit besteht also bei einer fehlerhaften Übertragung der ersten Instanz der Dateneinheiten die Möglichkeit die zweite Instanz zu überprüfen und gegebenenfalls zu korrigieren. Somit wirken die beiden Kommunikationskanäle mit dem jeweiligen Vorwärtsfehlerkorrekturen synergetisch zusammen. Schlägt die Korrektur der ersten Instanz fehl, so besteht noch immer die Möglichkeit die zweite Instanz, welche mittels des zweiten Kanals übermittelt wurde, zu überprüfen und gegebenenfalls zu reparieren. Schlug die Übermittlung der ersten Instanz fehl, so kann die zweite Instanz als Ersatzdaten verwendet werden. Die erste Instanz wird somit verworfen und es wird ohne Verzögerung mit der Verarbeitung der zweiten Instanz fortgefahren.

Die zweiten kodierten Dateneinheiten werden wahlweise über eines der beiden Datenübertragungsmedien an die Empfangsvorrichtung übertragen. Somit ist es also möglich, dass ein beliebiges Datenübertragungsmedium gewählt wird oder aber auch dass die zweiten Dateneinheiten in Segmente unterteilt werden und die Segmente wahlweise jeweils über das eine oder das andere Datenübertragungssegment gesendet werden können. Somit werden die zweiten Dateneinheiten beispielsweise über einen ersten Kommunikationspfad übermittelt und sobald weitere zweite Dateneinheiten vorliegen werden diese über den zweiten Kommunikationspfad gesendet. Somit ist es erfindungsgemäß möglich, die zweiten Dateneinheiten über wahlweise ein Datenübertragungsmedium zu übersenden unabhängig davon, wo die Dateneinheiten der ersten Dateneinheiten übermittelt werden. Auf diese Art und Weise kann ein Lastenausgleich erfolgen derart, dass immer das jeweils günstigere Übertragungsmedium ausgewählt wird. Eine Metrik für die Auswahl des Datenübertragungsmediums kann es sein, dass beispielsweise Latenzzeiten oder Bandbreiteverfügbarkeiten überprüft werden und sodann werden die zweiten Dateneinheiten über das Datenübertragungsmedium gesendet, welches gerade vorteilhafte Parameter aufweist. Wird beispielsweise erkannt, dass die ersten Dateneinheiten über ein bestimmtes Übertragungsmedium immer fehlerhaft übertragen werden, so kann für die zweiten Dateneinheiten das jeweils andere Datenübertragungsmedium ausgewählt werden. Die Auswahl ist hierbei nicht statisch, sondern die Auswahl kann für die zweiten Dateneinheiten auch dynamisch zur Laufzeit wechseln.

Gemäß einem Aspekt der vorliegenden Erfindung ist die Systemanordnung zur Lastenverteilung bezüglich von Bandbreiten und/ oder Latenzzeitvorgaben der beiden Datenübertragungsmedien eingerichtet. Dies hat den Vorteil, dass zur Übertragung der jeweiligen Daten das jeweils vorteilhafte Datenübertragungsmedium gewählt werden kann. Da sich die Parameter zur Laufzeit auch ändern können, bedeutet ein wahlweises Auswählen auch, dass die Dateneinheiten während der Laufzeit auch über das jeweils andere Datenübertragungsmedium gesendet werden können. Dies gilt insbesondere für die zweiten Dateneinheiten, welche über den ersten oder den zweiten Kanal gesendet werden können.

Gemäß einem weiteren Aspekt der vorliegenden Erfindung ist die Übertragung der kodierten Dateneinheiten über die Datenübertragung Medien sequenziell. Dies hat den Vorteil, dass eine effiziente und schnelle Datenübertragung gewährleistet wird und dass keine weiteren Logiken implementiert werden müssen beziehungsweise Zwischenkomponenten, wie dies bei der paketvermittelten Übertragung der Fall ist. Sequenziell kann gemäß einem Aspekt der vorliegenden Erfindung auch seriell bedeuten. Dies heißt also, dass die Daten in Serie geschaltet werden und eben nicht derart paketiert werden, dass ein Paket ein anderes überholen könnte. Beispielsweise können die Datensegmente beziehungsweise Dateneinheiten auch durchnummeriert werden und kommen immer in der vorgesehenen Reihenfolge an.

Gemäß einem weiteren Aspekt der vorliegenden Erfindung ist die Empfangseinheit eingerichtet die Korrektheit der ersten Instanz und/ oder der zweiten Instanz der Dateneinheiten anhand der Vorwärtsfehlerkorrektur zu überprüfen und/ oder zu korrigieren. Dies hat den Vorteil, dass Fehler an sich erkannt werden können und zudem kann ein Fehler gemäß der Vorwärtsfehlerkorrektur korrigiert werden. Ein Überprüfen der Vorwärtsfehlerkorrektur der zweiten Instanz der Dateneinheiten ist typischerweise nur dann erforderlich, wenn die Verifizierung der ersten Dateneinheiten fehlgeschlagen ist. Sodann kann überprüft werden, ob die zweite Instanz korrekt übermittelt wurde, ob diese sich gegebenenfalls korrigieren lässt, und ob diese weiterhin verwendet werden kann um die ersten Dateneinheiten in erster Instanz zu ersetzen.

Gemäß einem weiteren Aspekt der vorliegenden Erfindung ist die Empfangseinheit eingerichtet bei einer nicht korrekten Übertragung der ersten Instanz der Dateneinheiten die zweite Instanz der Dateneinheiten zu berücksichtigen. Dies hat den Vorteil, dass stets valide Dateneinheiten vorliegen und sodann können die ersten Dateneinheiten verworfen werden. Aufgrund einer möglichen seriellen beziehungsweise sequenziellen Übertragung ist es möglich, dass die zweite Instanz der Dateneinheiten zeitgleich zu der ersten Instanz an Dateneinheiten im Empfänger vorliegt. Auf diese Art und Weise ist es möglich in Echtzeit Daten der ersten Instanz durch Daten der zweiten Instanz zu ersetzen und es kommt zu keinerlei Verzögerung.

Gemäß einem weiteren Aspekt der vorliegenden Erfindung ist die Empfangseinheit eingerichtet bei einer nicht vorliegenden Übertragung der ersten Instanz der Dateneinheiten die zweite Instanz der Dateneinheiten zu berücksichtigen. Dies hat den Vorteil, dass Dateneinheiten berücksichtigt werden können, welche über eine andere Datenleitung übermittelt wurden und somit wird ein potenzieller Fehler beziehungsweise eine Beeinträchtigung im ersten Datenübertragungsmedium umgangen. Selbst wenn das erste Datenübertragungsmedium beschädigt ist oder nicht spezifikationsgemäß funktioniert, so ist sehr wahrscheinlich das zweite Übertragungsmedium funktional. Erfindungsgemäß ist es auch möglich, dass eine erste Instanz von Dateneinheiten über einen ersten Datenkanal gesendet wird beziehungsweise über ein erstes Übertragungsmedium und eine zweite Instanz über das zweite Übertragungsmedium, wobei bei einer weiteren ersten Instanz der Dateneinheiten der jeweils andere Kanal gewählt wird und somit auch für die weitere zweite Instanz von Dateneinheiten der erste Kanal gewählt wird. Somit ist also dynamisch zur Laufzeit ein Wechsel zwischen den einzelnen Dateneinheiten möglich. Liegen beispielsweise fünf erste Instanzen der ersten Dateneinheiten vor und somit auch fünf Instanzen der zweiten Dateneinheiten, so kann jeweils die erste Instanz jeweils über jeweils einen der Datenübertragungsmedien übertragen werden. Für die nächste Instanz der Dateneinheiten kann der Kanal beziehungsweise das Übertragungsmedium gewechselt werden. Somit werden erste Instanzen und zweite Instanzen alternierend über die Übertragungsmedien gesendet und somit kann überprüft werden, welcher Kanal beziehungsweise welches Datenübertragungsmedium spezifikationsgemäß funktioniert. Liegen beispielsweise fünf Instanzen der ersten Dateneinheiten vor, so können diese mit Bezug auf die Figuren bildlich beschrieben abwechselnd unten und oben gesendet werden. Gleiches gilt somit auch für die weiteren Instanzen der redundanten Daten, welche ebenfalls alternierend über den ersten oder den zweiten Kanal gesendet werden können.

Gemäß einem weiteren Aspekt der vorliegenden Erfindung werden die Dateneinheiten in Zellen unterteilt und jeder Zelle eine Vorwärtsfehlerkorrektur angehängt. Dies hat den Vorteil, dass nicht die Dateneinheiten insgesamt mit einer Vorwärtsfehlerkorrektur versehen werden müssen, sondern vielmehr können diese unterteilt werden und die Unterteilungen erhalten jeweils eine Vorwärtsfehlerkorrektur. Somit ist es möglich feingranular Vorwärtsfehlerkorrekturen einzustreuen und somit steigt auch die Möglichkeit Fehler zu korrigieren. Dies ist der Fall, da sich dann die Vorwärtsfehlerkorrekturen nur noch auf kleinere Segmente der Dateneinheiten beziehen und somit müssen lediglich kleinere Signalfolgen beziehungsweise Bitfolgen geschützt werden.

Gemäß einem weiteren Aspekt der vorliegenden Erfindung umfasst die Kodierung eine Leitungskodierung. Dies hat den Vorteil, dass hierbei sehr robuste Signalfolgen geschaffen werden, welche zusätzlich eine stabile Datenübertragung gewährleisten. Somit wird also noch ein weiterer Sicherheitsmechanismus verwendet, welcher sich vorteilhaft in die bestehende Merkmalskombination einfügen lässt. So ist es beispielsweise erfindungsgemäß möglich, dass die Dateneinheiten in kleinere Wörter zerlegt werden und besonders vorteilhaft Zeilen kodiert werden. Eine Zeilenkodierung wird auch als Leitungskodierung beschrieben und soll hier synonym verwendet werden.

Gemäß einem weiteren Aspekt der vorliegenden Erfindung ist die Datenübertragung über virtuelle Pfade durchführbar. Dies hat den Vorteil, dass auf den physischen Übertragungsmedien eine Vielzahl von virtuellen Pfaden betrieben werden kann, die unabhängig voneinander, aber in den Grenzen des physischen Datenpfads, betrieben werden können. Somit ist es beispielsweise möglich die ersten Dateneinheiten mit den zweiten Dateneinheiten auf einer gleichen physischen Ebene, also einem gleichen physischen Übertragungsmedium, zu übersenden wobei für die ersten Dateneinheiten ein erster virtueller Pfad auf dem einen physischen Kommunikationspfad vorgesehen ist und für die zweiten Dateneinheiten auf dem gleichen physischen Übertragungsmedium ein anderer virtueller Pfad vorgesehen ist.

Gemäß einem weiteren Aspekt der vorliegenden Erfindung liegen die Datenübertragungsmedien jeweils Kabel gebunden vor. Dies hat den Vorteil, dass Übertragungskanäle geschaffen werden, welche sich besonders einfach separieren lassen, das heißt also, dass das erste Datenübertragungsmedium das zweite Datenübertragungsmedium nicht beeinflusst. Hierzu kann es notwendig sein beispielsweise eine elektromagnetische Abschirmung vorzunehmen. Somit ist sichergestellt, dass die ersten Dateneinheiten und die zweiten Dateneinheiten wirklich gesondert voneinander, das heißt ohne Wechselwirkung, übertragen werden.

Gemäß einem weiteren Aspekt der vorliegenden Erfindung ist eine Spezifikation von Übertragungsparametern mitsamt deren Toleranzbereichen aller Dateneinheiten in den beiden Datenübertragungsmedien kumuliert realisiert. Dies hat den Vorteil, dass die Systemanordnung insgesamt gemäß einer Spezifikation einer gewissen geforderten Performanz unterliegen muss und somit muss also für die Übertragungsmedien sichergestellt werden, welche Charakteristika beziehungsweise Parameter diese aufweisen. So können beispielsweise gewisse Latenzzeiten oder eine gewisse Bandbreite gefordert werden, welche durch die Systemanordnung insgesamt, also kumuliert, bereitgestellt werden muss.

Gemäß einem weiteren Aspekt der vorliegenden Erfindung unterstützen die Datenübertragungsmedien jeweils 15 Gigabit pro Sekunde. Dies hat den Vorteil, dass eine ausreichende Bandbreite zur Verfügung steht und somit können in ihrer Gesamtheit 30 Gigabit pro Sekunde an Daten übertragen werden. Empirisch wurde ermittelt, dass dies gerade im Automobil besonders vorteilhaft ist. Zwar können selbstverständlich auch schnellere Datenleitungen vorgesehen werden, was aber einen höheren technischen Aufwand bedeuten würde.

Das Erzeugen von Ersatzdaten erfolgt erfindungsgemäß senderseitig und dient dazu übermittelte Daten bei einer fehlerhaften Übertragung beziehungsweise bei Kodierungsfehlern zu verwenden. Somit sind Ersatzdaten diejenigen Daten, die verwendet werden, wenn übermittelte Daten vom Empfänger nicht korrekt entgegengenommen werden können. Der Empfänger kann die erhaltenen Daten verifizieren, das heißt auf deren Korrektheit überprüfen, und bei einer negativen Verifizierung beziehungsweise Überprüfung können die Ersatzdaten verwendet werden. Somit dienen die Ersatzdaten nicht nur dazu, aber auch, die Korrektheit der eigentlichen Daten zu überprüfen, sondern vielmehr erfolgt, additiv oder alternativ, das Überprüfen durch eine Vorwärtsfehlerkorrektur. In dem Fall, dass die eigentlichen Daten korrekt übertragen wurden, können somit die Ersatzdaten verworfen werden. Erfolgt also anhand der Vorwärtsfehlerkorrektur ein positives Verifizieren beziehungsweise ein positives Überprüfen, so werden die Ersatzdaten gelöscht beziehungsweise nicht weiter berücksichtigt.

Aufgrund der seriellen Datenübertragung ist es gemäß einem Aspekt der vorliegenden Erfindung nicht möglich, dass einzelne Datenpakete andere überholen. Dies kann beispielsweise bei der paketorientierten Übermittlung erfolgen, und Daten werden zum Beispiel bei einem Ablauf einer vorgegebenen Zeitperiode erneut gesendet. Somit ist es erfindungsgemäß nicht notwendig, weitere Informationen über die Reihenfolge der Datenpakete hinzuzufügen. Die serielle Datenübertragung findet über ein kabelgebundenes Medium statt, also beispielsweise elektrisch oder über Glasfaser.

Somit findet die vorgeschlagene Erfindung besonders bevorzugt im Automobil Einsatz, da hier eine möglichst schnelle und dennoch fehlerfreie Übertragung der Daten notwendig ist.

So ist es erfindungsgemäß möglich die vorgeschlagene Systemanordnung einstückig bereitzustellen, das heißt, dass alle Komponenten fest verdrahtet miteinander verbunden sind und nicht zerstörungsfrei separiert werden können. Dies stellt gegenüber dem Stand der Technik einen Vorteil dar und somit können bekannte Verfahren der paketvermittelten Übertragung beziehungsweise aus der Internettechnologie nicht Einsatz finden.

Die Systemanordnung weist eine physische Applikationsvorrichtung auf, welche auf Anwendungsebene Daten von Signalquellen entgegennimmt. Bei einer solchen Signalquelle kann es sich beispielsweise um eine bildgebende Vorrichtung handeln, die gemäß einem Aspekt der vorliegenden Erfindung mittels HDMI und/ oder Displayport an der Applikationsvorrichtung angeschlossen wird. Somit kann die Applikationsvorrichtung über mehrere Eingänge beziehungsweise Schnittstellen verfügen. Hier werden potenziell sicherheitskritische Daten bereitgestellt, die sicher an einen Empfänger übertragen werden müssen.

Die Applikationsdaten werden gemäß einem Aspekt der vorliegenden Erfindung in Zellen gemäß einem vordefinierten Zellformat verpackt. Dies heißt dass die Daten umkodiert werden können oder aber die Daten bleiben unverändert und es werden lediglich weitere Informationen angehängt. So kann das Datenformat beziehungsweise das Zellformat vorsehen, dass den Daten Kopfdaten hinzugefügt werden, welche zum Beispiel einen virtuellen Pfad beschreiben. Auch wenn die vorgeschlagene Systemanordnung fest verdrahtet ist, so ist es dennoch möglich, dass die bestehenden Datenpfade dynamisch geschaltet werden, wozu eine Pfadtabelle vorzusehen ist. Die Reihenfolge der durchlaufenden Vorrichtungen ist jedoch stets gleich. Es können lediglich auf den vorhandenen physischen Pfaden unterschiedliche virtuelle Pfade adressiert werden, ohne dass hierbei im Ablaufdiagramm die Reihenfolge der Vorrichtungen zu ändern ist.

Erfindungsgemäß sind unterschiedliche Eingangsschnittstellen in der Applikationsvorrichtung vorgesehen. So dient beispielsweise ein erster Port als Eingangsschnittstelle und ein zweiter Port dient ebenfalls als Eingangsschnittstelle. Hierbei ist es möglich, dass die ersten Eingangsschnittstellen besonders sicherheitskritische Informationen bereitstellen, welche sodann an einer Vielzahl von Ausgangsschnittstellen weitergegeben werden. Innerhalb der Applikationsvorrichtung erfolgt somit ein Replizieren der Daten, welche an der Eingangsschnittstelle entgegengenommen werden und an dem Vielfachen bezüglich der Anzahl der Eingangsschnittstellen an den Ausgabeschnittstellen ausgegeben werden.

Das Vielfache in der Anzahl im Verhältnis zwischen der Anzahl der Eingangsschnittstellen und der Ausgang Schnittstellen bezieht sich also auf einen Faktor, bezüglich dem die Anzahl der Ausgangschnittstellen im Verhältnis zu der Anzahl der Eingangsschnittstellen verfügbar sind. Ist beispielsweise eine Eingangsschnittstelle vorgesehen, so kann ein Vielfaches hiervon sein, dass zwei oder in einem weiteren Beispiel drei Ausgangschnittstellen vorliegen. Liegen zwei Eingangsschnittstellen vor, so können dies in einem Beispiel drei oder sechs Ausgangsschnittstellen sein. Auf diese Art und Weise wird sichergestellt, dass die Anzahl der Daten im gleichen Verhältnis wie die Ausgangsschnittstellen repliziert werden. Das Vielfache ist derart auszulegen, dass mindestens zwei als ein Vielfaches gelten kann. Hierbei müssen nicht zwingendermaßen ganze Zahlen als Vielfaches vorliegen. So kann beispielsweise auch eine Anzahl von zwei Eingangsschnittstellen zu drei Ausgangschnittstellen führen. Der typische Fall ist hierbei, dass eine Eingangsschnittstelle vorliegt und zwei Ausgangschnittstellen. Somit bezieht sich der minimale Faktor von zwei auf die Anzahl von einer Eingangsschnittstelle. Liegen hingegen zwei Eingangsschnittstellen vor, so kann auch ein Faktor von 1,5 gelten. Wesentlich ist hierbei nur, dass die Anzahl der Eingangsschnittstellen nicht der Anzahl der Ausgangschnittstellen entspricht und dass logischerweise nur ganze Zahlen von Eingangsschnittstellen und Ausgangsschnittstellen vorliegen.

Die Applikationsvorrichtung nimmt also Datenpakete beziehungsweise Applikationsdaten entgegen und implizit durch die Anzahl der Ausgangsschnittstellen werden diese Daten repliziert. Auf diese Art und Weise wird ein effizientes Erzeugen von redundanten Ersatzdaten gewährleistet, ohne dass hierbei ein großer Rechenaufwand notwendig wäre. Allein durch die hardwaremäßige Verschaltung der Applikationsvorrichtung wird sichergestellt, dass die Daten redundant weitergeleitet werden. Somit ist diese Schaltung besonders robust und eben wenig fehleranfällig, da keine gesonderte Logik implementiert werden muss.

Die Daten werden an eine Zelldemultiplexvorrichtung redundant ausgegeben, welche also sodann die verpackten beziehungsweise kodierten Daten empfängt. Diese Vorrichtung verfügt über die gleiche Anzahl an Empfangsschnittstellen wie die Applikationsvorrichtung über Ausgangschnittstellen verfügt. Die Kommunikation zwischen diesen beiden Vorrichtungen kann über ein Kommunikationsmedium wie zum Beispiel eine Datenleitung oder zumindest einen Kontakt erfolgen. Dieser Datenkanal kann zudem derart ausgestaltet werden, dass auf diesem auch virtuelle Kommunikationspfade einrichtbar sind.

Zudem werden weitere Applikationsdaten anhand einer zweiten Anzahl von Eingangsschnittstellen der Applikationsvorrichtung entgegengenommen. Bei diesen Daten kann es sich um Daten handeln, welche nicht sicherheitskritisch sind und daher nicht redundant übertragen werden müssen. Bezüglich dieser Daten kann ebenfalls eine Kodierung gemäß dem Zellformat erfolgen und es kann diesen Daten auch eine Vorwärtsfehlerkorrektur beigefügt werden. Diese Daten werden durch die Applikationsvorrichtung einfach durchgeleitet und werden nicht redundant weitergeleitet. Somit gibt es für diese Eingangsschnittstellen eine gleiche Zahl an Ausgangschnittstellen. Dies kann eine Schnittstelle sein oder aber auch beispielsweise zwei, drei oder vier Schnittstellen. Auch diese Daten werden an die Zellmultiplexvorrichtung ausgegeben, was jedoch ohne eine Replizierung erfolgt.

Generell können die Applikationsdaten in der Applikationsvorrichtung geändert beziehungsweise verarbeitet werden. Somit werden diese vorliegend dennoch als Applikationsdaten bezeichnet und werden gemäß des vorgegebenen Zellformats in Zellen kodiert. Ferner ist es auch möglich, dass den Applikationsdaten weitere Daten hinzugefügt werden, was nicht nur Rahmendaten, wie beispielsweise Kopfdaten, entspricht, sondern vielmehr können auch diesen Applikationsdaten weitere Nutzdaten hinzugefügt werden. Somit liegen diese nach wie vor als Applikationsdaten vor, wurden jedoch bearbeitet und/ oder erweitert oder reduziert.

Erfindungsgemäß ist es besonders vorteilhaft, dass die Replizierung der Daten zwischen der Applikationsvorrichtung und der Zellmultiplexvorrichtung erfolgt. Somit wurde also erfindungsgemäß erkannt, dass ein Replizieren der Daten besonders früh in der Verarbeitungskette erfolgen muss, da hier die Daten mit hoher Wahrscheinlichkeit noch unverfälscht sind. Dies schafft den Vorteil gegenüber dem Stand der Technik, dass nicht unnötige Zwischenverarbeitungsschritte durchgeführt werden und erst im Nachgang die Daten gesichert beziehungsweise repliziert werden. Die vorgeschlagene Erfindung basiert auf einem Drei-Schichten-Modell und nicht etwa wie herkömmliche Schichtenmodelle, die siebenstufig ausgestaltet sind. Somit finden herkömmliche Schichtenmodelle keine Anwendung, insbesondere auch deshalb, da diese Schichtenmodelle in der paketvermittelten Datenübertragung Einsatz finden. Während also generell der Stand der Technik ein Replizieren von Daten kennt, wird erfindungsgemäß ein Replizieren in Zusammenhang mit einer Fehlerkorrektur synergetisch verbunden und die spezielle Position innerhalb der Vorrichtungen schafft den besonderen technischen Effekt, dass die Systemanordnung insgesamt sehr fehlerrobust ist, da gleich zu Beginn des Verarbeitungsprozesses die Daten repliziert werden.

Gemäß einem Aspekt der vorliegenden Erfindung liegen die Ausgangsschnittstellen und/ oder die Eingangsschnittstellen jeweils als physische Schnittstellen vor. Dies hat den Vorteil, dass die Eingangsschnittstellen als herkömmliche Ports realisiert werden können und durch die physische Ausgestaltung von Eingangsschnittstellen und Ausgangsschnittstellen ist es möglich, dass die Applikationsdaten ohne eine computerimplementierte beziehungsweise dynamische Logik repliziert werden können. So ist es nicht notwendig, einen Prozessor vorzusehen, der die Daten repliziert, sondern vielmehr kann die Applikationsvorrichtung so verschaltet werden, dass diese allein schon aufgrund der Verschaltung die Daten repliziert. Somit wird ein fehlerrobuster Ansatz geschaffen, der eben nicht zulässt, dass die Daten verfälscht werden. Zudem ergeben sich Vorteile in der Verarbeitungszeit und dem technischen Aufwand die vorgeschlagene Systemanordnung bereitzustellen.

Gemäß einem Weg der vorliegenden Erfindung werden die Applikationsdaten von der Applikationsvorrichtung an die Zellmultiplexvorrichtung und/ oder von der Zellmultiplexvorrichtung an einer Datenübertragungsvorrichtung mittels virtueller Kommunikationspfade gesendet. Dies hat den Vorteil, dass die physischen Kommunikationskanäle optimal ausgelastet werden können und es können über einen einzigen physischen Kanal diverse virtuelle Kanäle eingerichtet werden und diese auch gesondert gesteuert werden. So ist es möglich, dass die virtuellen Pfade beispielsweise bezüglich einer Bandbreitenauslastung optimiert werden. Darüber hinaus ist die vorgeschlagene Systemanordnung besonders Hardware effizient, da nicht für jeden Kanal ein eigener physischer Kanal geschaffen werden muss.

Gemäß einem weiteren Aspekt der vorliegenden Erfindung sieht das Zellformat Rahmendaten und/ oder mindestens eine Quellkennung eines virtuellen Pfads zur Datenübertragung vor. Dies hat den Vorteil, dass in dem Zellformat festgelegt werden kann, über welchen virtuellen Kanal Daten gesendet werden, was beispielsweise anhand einer Kanalkennung erfolgen kann. Additiv oder alternativ ist es auch möglich, dass eine Quellkennung vorgegeben wird, welche also angibt, von welcher Schnittstelle die Daten stammen und somit kann zurückverfolgt werden, um welche Daten es sich ursprünglich gehandelt hat. Darüber hinaus ist es möglich, dass die Quellkennung eine Schnittstelle definiert und somit angibt, welcher Pfad ausgehend von der Quelle zu wählen ist. Bei den Pfaden kann es sich ebenfalls um virtuelle Kanäle beziehungsweise Pfade handeln oder aber auch um einen physischen Pfad. Beispielsweise können die virtuellen Pfade durchnummeriert werden und somit wird jedem Pfad eine Kennung beziehungsweise ein numerischer Wert zugewiesen. Darüber hinaus können in den Rahmendaten auch Vorwärtsfehlerkorrekturen hinterlegt werden.

Gemäß einem weiteren Aspekt der vorliegenden Erfindung sieht das Zellformat einen numerischen Wert vor, welcher einen virtuellen Pfad einer Datenübertragung identifiziert. Dies hat den Vorteil, dass der virtuelle Pfad anhand eines einfachen Verfahrens identifiziert werden kann und es kann bereits in der Applikationsvorrichtung festgelegt werden, welcher virtuelle Pfad zu wählen ist.

Gemäß einem weiteren Aspekt der vorliegenden Erfindung sind zwischen der Applikationsvorrichtung und der Zellmultiplexvorrichtung maximal 128 virtuelle Pfade zur Datenübertragung einrichtbar. Dies hat den Vorteil, dass anhand eines Bytes virtuelle Pfade identifizierbar sind und darüber hinaus würde empirisch ermittelt, dass 128 virtuelle Pfade gerade im Automobil ausreichend sind. Auf diese Art und Weise ist eine effiziente Kennung der virtuellen Pfade möglich.

Gemäß einem weiteren Aspekt der vorliegenden Erfindung ist die Datenübertragungsvorrichtung mit einer Datenempfangsvorrichtung gekoppelt, welche zur Entgegennahme der Applikationsdaten eingerichtet ist und ferner eingerichtet ist zur Prüfung jeder Fehlervorwärtskorrektur und wobei bei einer negativen Überprüfung einer Fehlervorwärtskorrektur ein Ersetzen fehlerhafter Applikationsdaten durch redundant übermittelte Applikationsdaten erfolgt. Dies hat den Vorteil, dass die Datenempfangsvorrichtung die Korrektheit der Datenübertragung überprüfen kann, da alle Daten beziehungsweise Applikationsdaten und/ oder Zellen mit einer Vorwärtsfehlerkorrektur versehen sind. Somit kann bei redundanten Applikationsdaten eine erste Einheit an Applikationsdaten mittels des Vorwärtsfehlerkorrekturcodes verifiziert werden, das heißt auf Echtheit geprüft werden, und wird mittels der Vorwärtsfehlerkorrektur erkannt, dass die Daten nicht korrekt vorliegen, kann auf die Ersatzdaten, also eine Einheit von zweiten redundant übermittelter Applikationsdaten zurückgegriffen werden. Auch diese zweiten Applikationsdaten sind mit einer Vorwärtsfehlerkorrektur versehen, sodass auch hier erkannt werden kann, ob die Daten korrekt übermittelt wurden.

Gemäß einem weiteren Aspekt der vorliegenden Erfindung weist die Daten Empfangsvorrichtung eine Zelldemultiplexvorrichtung auf, welche Applikationsdaten aus den Zellen an eine Applikationsvorrichtung der Datenempfangsvorrichtung mittels virtueller Pfade weiterreicht. Dies hat den Vorteil, dass auf der Empfängerseite ebenfalls eine Applikationsvorrichtung vorgesehen wird, welche der Applikationsvorrichtung auf der Senderseite entspricht und somit können die beiden Applikationsvorrichtungen miteinander kommunizieren. Beispielsweise kann die Sendevorrichtung der Empfängervorrichtung analog ausgestaltet werden und somit durchlaufen die empfangenen Daten invers die gleichen Vorrichtungen wie auf der Senderseite. Auch hierbei ist es vorteilhaft, die Daten möglichst spät zu überprüfen, da diese mitsamt der Vorwärtsfehlerkorrektur an die Applikationsvorrichtung auf der Empfängerseite übermittelt werden und somit besteht eben die Möglichkeit die Vorwärtsfehlerkorrektur bis zum Ende des Verarbeitungsprozesses mitzuführen und gegebenenfalls Fehler zu erkennen.

Gemäß einem weiteren Aspekt der vorliegenden Erfindung wird jede Zelle mit einer Fehlervorwärtskorrektur kodiert. Dies hat den Vorteil, dass alle Daten mit Fehlervorwärtskorrekturen versehen werden und somit ist es eben möglich, entsprechende Fehler nicht nur zu erkennen, sondern auch zu korrigieren. Ist dies empfängerseitig nicht möglich, so werden erfindungsgemäß Ersatzdaten bereitgestellt, welcher sodann ebenfalls bezüglich ihrer Korrektheit überprüft werden können und sodann die eigentlichen Daten ersetzen können. Somit ist sichergestellt, dass stets fehlerfreie Daten übertragen werden und dies kann auch abgeprüft werden.

Gemäß einem weiteren Aspekt der vorliegenden Erfindung werden die redundanten Applikationsdaten zwischen der Datenübertragungsvorrichtung und einer Datenempfangsvorrichtung über getrennte Kommunikationsmedien übertragen. Dies hat den Vorteil, dass auch Fehler in den Kommunikationsmedien, beispielsweise Kabeln, erkannt beziehungsweise behoben werden können. Ist ein Kommunikationsmedium defekt, so steht stets ein weiteres Kommunikationsmedium bereit und über dies können die Ersatzdaten gesendet werden. Somit besteht also auch eine Fehlerrobustheit im Übertragungsweg.

Gemäß einem weiteren Aspekt der vorliegenden Erfindung sind die Applikationsvorrichtung, die Zellmultiplexvorrichtung und/ oder die Datenübertragungsvorrichtung physisch ausgestaltet. Dies hat den Vorteil, dass eine besonders effiziente Hardwarestruktur geschaffen wird, die sowohl fehlerrobust und auch performant ist. Dies ist gerade im Automobil von Vorteil.

Gemäß einem weiteren Aspekt der vorliegenden Erfindung ist das Vielfache der ersten Anzahl an redundanten Ausgangschnittstellen genau zwei. Dies hat den Vorteil, dass die Daten stets dupliziert übertragen werden und auch bei einer einzigen Instanz von Applikationsdaten liegen zwei Instanzen von Applikationsdaten vor, wobei eine Instanz den eigentlichen Daten entspricht und die zweite Instanz repräsentiert die Ersatzdaten.

Die Aufgabe wird auch gelöst durch ein Verfahren zur Absicherung einer Datenübertragung, aufweisend ein Bereitstellen einer Sendevorrichtung eingerichtet zur redundanten Kodierung von ersten Dateneinheiten in eine erste Instanz der ersten Dateneinheiten und eine zweite identische und somit redundante Instanz der ersten Dateneinheiten, und ferner eingerichtet zur Kodierung von zweiten Dateneinheiten, wobei bei allen Kodierungen ein Hinzufügen jeweils einer Vorwärtsfehlerkorrektur erfolgt; und ein Bereitstellen von genau zwei physischen, getrennten Datenübertragungsmedien, welche die Sendevorrichtung und eine Empfangsvorrichtung kommunikativ koppeln, wobei die Sendevorrichtung eingerichtet ist die erste Instanz der ersten Dateneinheiten über ausschließlich ein Datenübertragungsmedium zu übertragen und die zweite Instanz der ersten Dateneinheiten über ausschließlich das jeweils andere Datenübertragungsmedium zu übertragen und ferner die zweiten kodierten Dateneinheiten über ein wahlweises der beiden Datenübertragungsmedien an die Empfangsvorrichtung zu übertragen.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Schichtenmodell einer Architektur zur Verwendung in der Systemanordnung zur Erzeugung von Ersatzdaten gemäß einem Aspekt der vorliegenden Erfindung;
- Figur 2:: ein schematisches Blockschaltbild der vorgeschlagenen Systemanordnung zur Erzeugung von Ersatzdaten gemäß einem Aspekt der vorliegenden Erfindung;
- Figur 3:: ein weiteres schematisches Blockschaltbild der vorgeschlagenen Systemanordnung zur Erzeugung von Ersatzdaten gemäß einem Aspekt der vorliegenden Erfindung;
- Figur 4:: ein weiteres schematisches Blockschaltbild der vorgeschlagenen Systemanordnung zur Erzeugung von Ersatzdaten gemäß einem Aspekt der vorliegenden Erfindung;
- Figur 5:: ein Zelldatenformat gemäß einem Aspekt der vorliegenden Erfindung; und
- Figur 6:: ein schematisches Ablaufdiagramm des vorgeschlagenen Verfahrens zur Erzeugung von Ersatzdaten bei negativer Verifizierung von zu übertragenden Daten bei einer seriellen Datenübertragung im Automobil gemäß einem weiteren Aspekt der vorliegenden Erfindung.

Die vorliegenden Figuren weisen teilweise Parameter auf, welche dem Fachmann in der englischen Bezeichnung so geläufig sind und welche als Parameter verwendet werden und so nicht zu übersetzen sind.

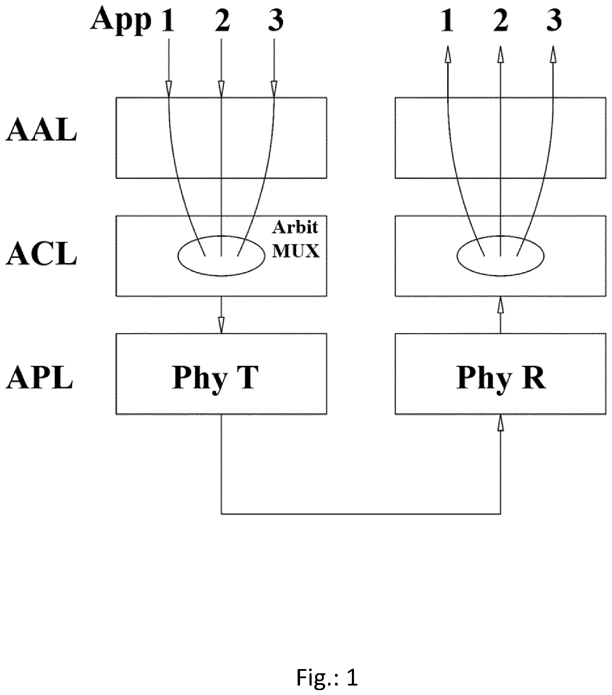

Figur 1 zeigt in einem schematischen Blockdiagramm eine Architektur, wie sie gemäß einem Aspekt der vorliegenden Erfindung, Verwendung finden kann. Hierzu sind zweimal drei Schichten eingezeichnet, die analog aber invers ausgestaltet sind und der Kommunikationsverlauf auf der linken Seite vom Sender nach unten hin zum Empfänger auf der rechten Seite nach oben verläuft. Ganz oben sind die Applikationen APP 1, 2 und 3 eingezeichnet, welche mit den Applikationen auf der Empfängerseite kommunizieren. Auf der linken Seite oben ist die Applikationsvorrichtung eingezeichnet, darunter ist die Zellmultiplexvorrichtung eingezeichnet und darunter ist die Datenübertragungsvorrichtung auf physischer Ebene eingezeichnet. Diese wird links auf der Senderseite als physischer Transmitter bezeichnet und auf der rechten Seite wird die Datenempfangsvorrichtung als physischer Receiver bezeichnet.

Erfindungsgemäß wurde erkannt, dass gerade in dieser Architektur, also nicht in einer siebenschichtigen Architektur, die Daten besonders vorteilhaft zwischen den ersten beiden oberen Schichten multipliziert beziehungsweise dupliziert werden sollen. Somit wird also bewerkstelligt, dass die Applikationsdaten zu einem besonders frühen Zeitpunkt auf der oberen Schicht, also der Schicht zwischen der Applikationsvorrichtung und der Zellmultiplexvorrichtung redundant kodiert werden. Auf der Empfängerseite, vorliegend rechts, werden die Daten ebenfalls zwischen der Zelldemultiplexvorrichtung und der Applikationsvorrichtung rechts oben überprüft beziehungsweise bezüglich Fehlern korrigiert.

Die Schichten können auch von oben nach unten als Application Adaptation Layer AAL (Applikationsvorrichtung), Cell Layer ACL (Zellmultiplexvorrichtung oder Zelldemultiplexvorrichtung) und Physical Layer APL (Datenübertragungsvorrichtung) bezeichnet werden.

Die Virtual Path Layers sind der Physical Layer, der aus dem Transmission Sublayer und dem Physical Medium Sublayer besteht, der Cell Layer und der Application Adaptation Layer, der den Segmentation & Reassembly Sublayer und die Funktionen zur Anpassung der Datenformate an die entsprechende Anwendung enthält.

Die Hauptaufgabe des Physical Layer besteht darin, die physikalische Verbindung zu anderen Physical Layern herzustellen. Diese Verbindung ist grundsätzlich bidirektional zu verstehen. Theoretisch lässt sich dieser Zusammenhang über verschiedenste Medien realisieren. In der Praxis werden zwei serielle differenzielle GBps-Verbindungen verwendet. In dieser Schicht erfolgt die Leitungskodierung, das Einfügen von Leerzellen zur Entkopplung der Zellrate von der Linkrate und die Integration des Zellstroms in den seriellen Rahmen.

In der Zellschicht werden die segmentierten Daten (Zellnutzlast) der oben liegenden Segmentierungs- und Reassemblierungs-Unterschicht mit Header, VP-Kennung und CRC zu vollständigen Zellen zusammengesetzt oder Zellen werden CRC-geprüft und die Nutzlast wird an die Segmentierungs- und Reassemblierungs-Unterschicht weitergeleitet. Hier erfolgt auch das Multiplexen der verschiedenen Zellströme der Anwendungsanpassungsfunktionen bzw. die Verteilung der Zellnutzlasten auf die Anwendungsanpassungsfunktionen gemäß dem VP-Identifier. (Einspeisung / Ausspeisung).

Im Cell Layer erfolgt auch das Multiplexen und Demultiplexen von Zellströmen in Repeatern und Splittern (Weiterleitung).

Die Aufgabe des Application Adaptation Layer besteht darin, die Daten der Anwendungsschnittstellen an das Format des Nutzdatenfeldes der Zelle anzupassen und Steuerinformationen an die Gegenseite zu übermitteln bzw. Steuerinformationen der Gegenseite für die Anpassung zu nutzen ( Takterzeugung, Rahmenbau).

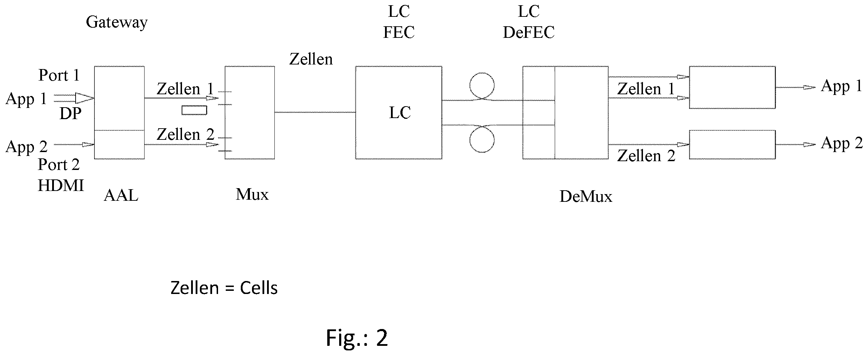

Figur 2 zeigt in einem schematischen Blockdiagramm die vorgeschlagene Systemanordnung gemäß einem Aspekt der vorliegenden Erfindung. Auf der linken Seite sind die ersten drei Einheiten der vorgeschlagenen Systemanordnung eingezeichnet, wobei der ganz linke Block die Applikationsvorrichtung darstellt, der mittlere Block, die Zellmultiplexvorrichtung und der rechte Block die Datenübertragungsvorrichtung. Die vorgeschlagene Erfindung kann bereits anhand der ersten beiden linken Blöcke implementiert werden, wobei die Daten zwischen dem ersten und dem zweiten Block redundant übertragen werden. Vorliegend auf der linken Seite sind zwei Applikationen, nämlich Applikation 1 und Applikation 2 eingezeichnet, welche jeweils mittels einer Eingangsschnittstelle, also einen Port, an die Applikationsvorrichtung, ganz links, Daten übertragen. Die erste Einheit beziehungsweise die Applikationsvorrichtung ist derart ausgestaltet, dass sie die Daten der ersten Applikation redundant überträgt und die Applikationsdaten der zweiten Applikation nicht redundant überträgt. Somit kann der obere Pfeil der Datenübertragung zwischen der Applikationsvorrichtung und der Zellmultiplexvorrichtung auch mehrfach eingetragen werden. Vorliegend sind nur zwei Pfade eingezeichnet, nämlich der obere Pfad für die redundanten Daten und der untere Pfad für die nicht redundanten Daten. Wie auf der Zellmultiplexvorrichtung eingetragen ist, kann diese mehrere Eingangsschnittstellen beziehungsweise Datenempfangsschnittstellen aufweisen. Die Zelle 1 beziehungsweise die Zellen 1 werden somit mehrfach übertragen, während die Zelle 2 beziehungsweise Zellen 2 einfach übertragen werden. Zudem werden die Zellen in der Applikationsvorrichtung mit jeweils einer Fehlervorwärtskorrektur versehen.

Wie in der vorliegenden Figur 2 ersichtlich ist, werden die Daten frühzeitig repliziert, also bereits nach der ersten Vorrichtung ganz links. Somit ist es erfindungsgemäß besonders vorteilhaft, dass hier die Daten noch mit hoher Wahrscheinlichkeit unverfälscht vorliegen. In der dritten Einheit, also der Datenübertragungsvorrichtung werden die Datenzeilen kodiert und/ oder hier mit einer Vorwärtsfehlerkorrektur versehen.

Die ersten drei Vorrichtungen stellen somit den Sender dar und sind gemäß der Architektur nach Figur 1 ausgestaltet. Die Schleifen in der Mitte der Figur 2 stellen ein Übertragungsmedium dar, über welches die Daten von dem Sender an den Empfänger auf der rechten Seite übertragen werden. Auf der rechten Seite sind lediglich schematisch zwei Vorrichtungen eingezeichnet, welche jedoch auch analog dem Sender als drei Vorrichtungen ausgestaltet werden können. Auf der ganz rechten Seite ist eingetragen, dass die entsprechenden Applikationen 1 und 2 die Daten am Ende der Verarbeitung verwerten können. Gemäß der redundanten Übermittlung liegen die Daten mit einer Vorwärtsfehlerkorrektur mehrfach vor und somit können beispielsweise die Zellen 1 bezüglich ihrer Korrektheit überprüft werden und bei einer negativen Korrektheitsprüfung werden die Ersatzdaten verwendet.

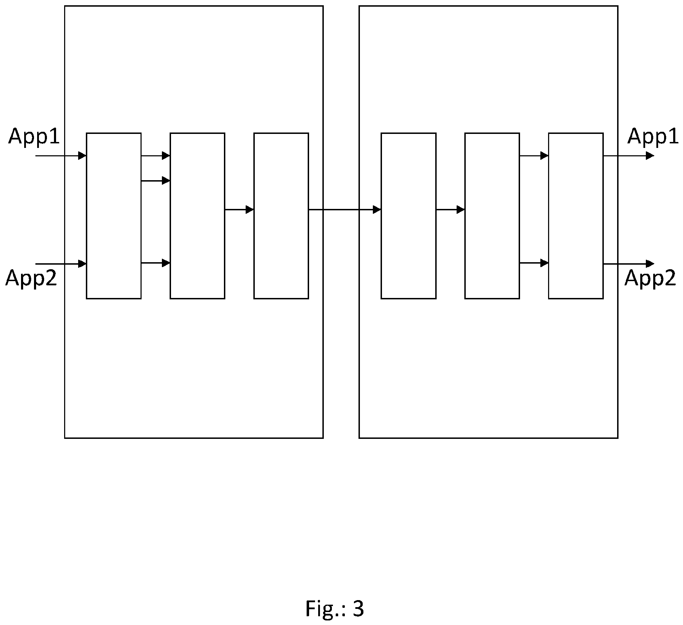

Figur 3 zeigt in einem schematischen Blockschaltbild die vorgeschlagene Erfindung und insbesondere eine Systemanordnung, wobei die linken beiden Blöcke alleine die Systemanordnung realisieren können. Weitere Blöcke, also Blöcke 3, 4, 5 und 6 sind optional.

Wie vorliegend gezeigt ist, sind auf der linken Seite zwei Applikationen vorgesehen, wobei die erste Applikation Applikationsdaten liefert, welche redundant an die Zellmultiplexvorrichtung senden. Dies ist mit zwei Pfeilen dargestellt. Die Applikation 2 liefert nicht redundante Daten, welche somit mit einem Pfeil übermittelt werden. Bei den Pfeilen kann es sich um Übertragungsmedien oder zumindest um einen Kontakt handeln. Hierauf können virtuelle Datenpfade implementiert werden. Auf der linken Seite ist der Sender dargestellt, und auf der rechten Seite ist der Empfänger dargestellt, wobei beide Seiten analog aber invers implementiert werden können. Somit ist empfängerseitig auf der rechten Seite die Applikationsvorrichtung eingetragen, in der Mitte die Zelldemultiplexvorrichtung und auf der linken Seite die Datenempfangsvorrichtung. Die Daten werden bildlich beschrieben von links nach rechts übermittelt und werden auf der rechten Seite von der Applikation 1 und der Applikation 2 verwendet.

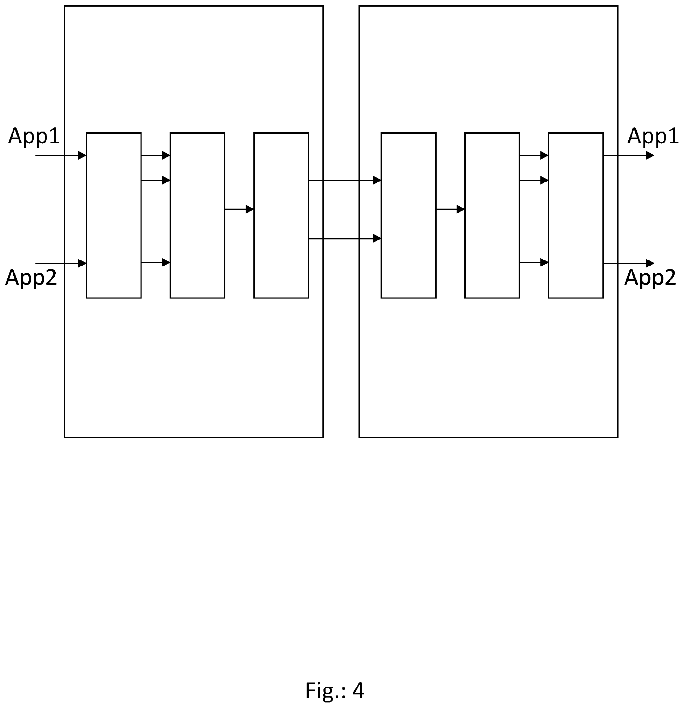

Figur 4 zeigt ebenfalls in einer schematischen Übersicht die vorgeschlagene Systemanordnung, wobei nunmehr zwei Übertragungsmedien eingezeichnet sind. Somit kann beispielsweise das obere Übertragungsmedium die redundanten Applikationsdaten übertragen und der untere Kanal, also das untere Kommunikationsmedium, kann eine redundante Instanz dieser Applikationsdaten übermitteln. Somit ist sichergestellt, dass der Übertragungspfad ebenfalls redundant ausgestaltet ist und bei einer Beschädigung beziehungsweise bei einer Fehlerbehaftung eines Kanals werden die Ersatzdaten mittels eines anderen Kanals übertragen. Die nicht redundanten Applikationsdaten können wahlweise über einen der Kanäle übertragen werden. Hierbei ist es auch möglich, dass unterschiedliche Zellen der nicht redundanten Daten über unterschiedliche Kommunikationsmedien gesendet werden. Somit wird erfindungsgemäß besonders vorteilhaft ein redundanter Datenkanal geschaffen, der bezüglich der Auslastung balanciert werden kann.

Werden beispielsweise Applikationsdaten beschädigt übermittelt beziehungsweise nicht korrekt, so kann dies mittels der Fehlervorwärtskorrektur erkannt und behoben werden. Liegen die Daten jedoch nicht vor, da der Kommunikationskanal ausfällt, so werden die Ersatzdaten verwendet, welche in jedem Fall vorliegen, da der zweite Kommunikationskanal für diese Ersatzdaten verwendet wird. In dem unwahrscheinlichen Fall, dass beide Kommunikationsmedien versagen, so terminiert das Verfahren, was ebenfalls erkannt wird. Somit werden also nicht nur die Applikationsdaten repliziert, sondern diese werden auch gesondert über einen eigenen Datenkanal übertragen, was die Fehlerrobustheit nochmals erhöht.

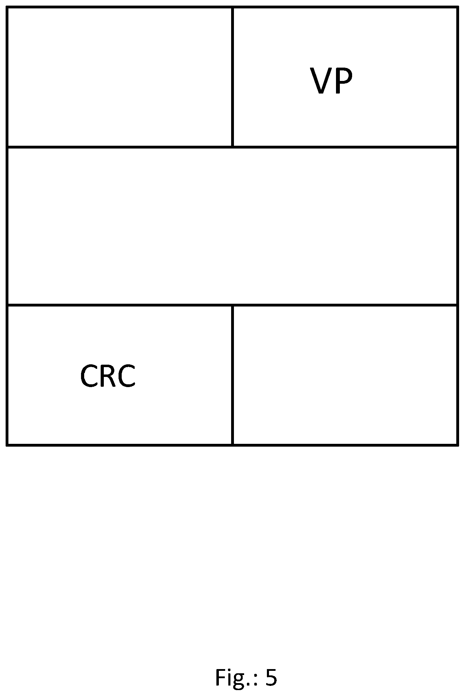

Figur 5 zeigt einen schematischen Aufbau eines Zielformats gemäß einem Aspekt der vorliegenden Erfindung. Oben rechts ist ein Feld eingezeichnet, welches einen virtuellen Pfad VP beschreibt und beispielsweise einen numerischen Wert vorsieht. Der numerische Wert beschreibt den virtuellen Kanal über den die Zelle übertragen werden soll. Unten links steht das Kürzel für eine zyklische Redundanzprüfung CRC. Bei den weiteren Datenfeldern kann es sich um weitere Rahmendaten handeln oder aber auch die Nutzdaten, welche vorzugsweise in dem größten Feld übertragen werden. Somit zeigt Figur 5 ein Beispiel für eine kodierte Zelle, welche Rahmendaten aufweist. Die Zelle wird gemäß dem bereitgestellten Zellformat kodiert. Somit zeigt Figur 5 also die kodierten Applikationsdaten, welche als Zellformat kodiert werden und somit neben den Nutzdaten auch weitere Informationen bereitstellen. Der virtuelle Pfad ermöglicht beispielsweise die redundante Datenübertragung, so dass Applikationsdaten, welche in Zellen verpackt sind, mittels eines ersten virtuellen Pfades übermittelt werden können und die gleichen Daten, also die Ersatzdaten können mittels eines anderen virtuellen Pfads übermittelt werden. Somit ist es also möglich, dass die verpackten Applikationsdaten, wie sie in Figur 5 gezeigt sind, gemäß dieser Zelle mehrfach vorliegen, wobei lediglich das Feld des virtuellen Pfads angepasst wird.

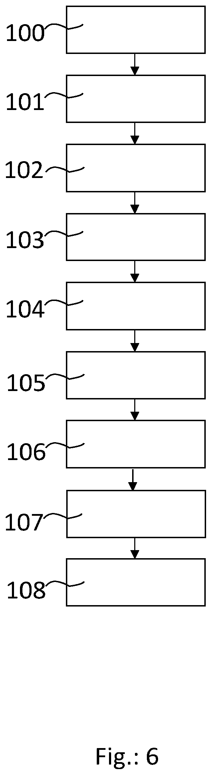

Figur 6 zeigt in einem schematischen Ablaufdiagramm ein Verfahren zur Absicherung einer Datenübertragung, aufweisend ein Bereitstellen 100 einer Sendevorrichtung eingerichtet zur redundanten Kodierung 101 von ersten Dateneinheiten in eine erste Instanz der ersten Dateneinheiten und eine zweite identische und somit redundante Instanz der ersten Dateneinheiten, und ferner eingerichtet zur Kodierung 102 von zweiten Dateneinheiten, wobei bei allen Kodierungen 101, 102 ein Hinzufügen 103 jeweils einer Vorwärtsfehlerkorrektur erfolgt; und ein Bereitstellen 104 von genau zwei physischen, getrennten Datenübertragungsmedien, welche die Sendevorrichtung und eine Empfangsvorrichtung kommunikativ koppeln 105, wobei die Sendevorrichtung eingerichtet ist die erste Instanz der ersten Dateneinheiten über ausschließlich ein Datenübertragungsmedium zu übertragen 106 und die zweite Instanz der ersten Dateneinheiten über ausschließlich das jeweils andere Datenübertragungsmedium zu übertragen 107 und ferner die zweiten kodierten Dateneinheiten über ein wahlweises der beiden Datenübertragungsmedien an die Empfangsvorrichtung zu übertragen 108.

Demgemäß wird eine Systemanordnung zur Erzeugung von Ersatzdaten bei negativer Verifizierung von zu übertragenden Daten bei einer seriellen Datenübertragung im Automobil vorgeschlagen, aufweisend eine physische Applikationsvorrichtung eingerichtet zum Verpacken von Applikationsdaten in Zellen eines vordefinierten Zellformats, wobei die Applikationsdaten mittels einer ersten Anzahl von Eingangsschnittstellen der Applikationsvorrichtung entgegengenommen werden und mittels eines Vielfachen der ersten Anzahl an redundanten Ausgangsschnittstellen der Applikationsvorrichtung an eine Zellmultiplexvorrichtung redundant ausgegeben werden und wobei weitere Applikationsdaten anhand einer zweiten Anzahl von Eingangsschnittstellen der Applikationsvorrichtung entgegengenommen werden und die zweite Anzahl an nichtredundanten Ausgangsschnittstellen der Applikationsvorrichtung an eine Zellmultiplexvorrichtung ausgegeben werden; und die Zellmultiplexvorrichtung aufweisend für jede Ausgangsschnittstelle der Applikationsvorrichtung eine Empfangsschnittstelle eingerichtet zur Entgegennahme der in Zellen verpackten Applikationsdaten, wobei die Zellmultiplexvorrichtung eingerichtet ist zum Weiterleiten der in Zellen verpackten Applikationsdaten an eine Datenübertragungsvorrichtung, welche die Applikationsdaten mit Fehlervorwärtskorrekturen versieht.

## Patentansprüche

1. Systemanordnung zur Absicherung einer Datenübertragung, aufweisend:
- eine Sendevorrichtung eingerichtet zur redundanten Kodierung von ersten Dateneinheiten in eine erste Instanz der ersten Dateneinheiten und eine zweite identische und somit redundante Instanz der ersten Dateneinheiten, und ferner eingerichtet zur Kodierung von zweiten Dateneinheiten, wobei bei allen Kodierungen ein Hinzufügen jeweils einer Vorwärtsfehlerkorrektur erfolgt; und
- genau zwei physische, getrennte Datenübertragungsmedien, welche die Sendevorrichtung und eine Empfangsvorrichtung kommunikativ koppeln, wobei die Sendevorrichtung eingerichtet ist die erste Instanz der ersten Dateneinheiten über ausschließlich ein Datenübertragungsmedium zu übertragen und die zweite Instanz der ersten Dateneinheiten über ausschließlich das jeweils andere Datenübertragungsmedium zu übertragen und ferner die zweiten kodierten Dateneinheiten über ein wahlweises der beiden Datenübertragungsmedien an die Empfangsvorrichtung zu übertragen.

2. Systemanordnung nach Anspruch 1, **dadurch gekennzeichnet, dass** die Systemanordnung zur Lastenverteilung bezüglich von Bandbreiten und/ oder Latenzzeitvorgaben der beiden Datenübertragungsmedien eingerichtet ist.

3. Systemanordnung nach Anspruch 1 oder 2, **dadurch gekennzeichnet, dass** die Übertragung der kodierten Dateneinheiten über die Datenübertragungsmedien sequentiell ist.

4. Systemanordnung nach einem der vorhergehenden Ansprüche, **dadurch gekennzeichnet, dass** die Empfangseinheit eingerichtet ist die Korrektheit der ersten Instanz der Dateneinheiten anhand der Vorwärtsfehlerkorrektur zu überprüfen und/ oder zu korrigieren.

5. Systemanordnung nach einem der vorhergehenden Ansprüche, **dadurch gekennzeichnet, dass** die Empfangseinheit eingerichtet ist bei einer nicht korrekten Übertragung der ersten Instanz der Dateneinheiten die zweite Instanz der Dateneinheiten zu berücksichtigen.

6. Systemanordnung nach einem der vorhergehenden Ansprüche, **dadurch gekennzeichnet, dass** die Empfangsvorrichtung eingerichtet ist bei einer nicht vorliegenden Übertragung der ersten Instanz der Dateneinheiten die zweite Instanz der Dateneinheiten zu berücksichtigen.

7. Systemanordnung nach einem der vorhergehenden Ansprüche, **dadurch gekennzeichnet, dass** die Dateneinheiten in Zellen unterteilt werden und jeder Zelle eine Vorwärtsfehlerkorrektur angehängt wird.

8. Systemanordnung nach einem der vorhergehenden Ansprüche, **dadurch gekennzeichnet, dass** die Kodierung eine Leitungskodierung umfasst.

9. Systemanordnung nach einem der vorhergehenden Ansprüche, **dadurch gekennzeichnet, dass** die Datenübertragung über virtuelle Pfade durchführbar ist.

10. Systemanordnung nach einem der vorhergehenden Ansprüche, **dadurch gekennzeichnet, dass** die Datenübertragungsmedien jeweils kabelgebunden vorliegen.

11. Systemanordnung nach einem der vorhergehenden Ansprüche, **dadurch gekennzeichnet, dass** eine Spezifikation von Übertragungsparametern mitsamt deren Toleranzbereichen aller Dateneinheiten in den beiden Datenübertragungsmedien kumuliert realisiert ist.

12. Systemanordnung nach einem der vorhergehenden Ansprüche, **dadurch gekennzeichnet, dass** die Datenübertragungsmedien jeweils 15 Gbit/s unterstützen.

13. Verfahren zur Absicherung einer Datenübertragung, aufweisend:
- ein Bereitstellen (100) einer Sendevorrichtung eingerichtet zur redundanten Kodierung (101) von ersten Dateneinheiten in eine erste Instanz der ersten Dateneinheiten und eine zweite identische und somit redundante Instanz der ersten Dateneinheiten, und ferner eingerichtet zur Kodierung (102) von zweiten Dateneinheiten, wobei bei allen Kodierungen (101, 102) ein Hinzufügen (103) jeweils einer Vorwärtsfehlerkorrektur erfolgt; und
- ein Bereitstellen (104) von genau zwei physischen, getrennten Datenübertragungsmedien, welche die Sendevorrichtung und eine Empfangsvorrichtung kommunikativ koppeln (105), wobei die Sendevorrichtung eingerichtet ist die erste Instanz der ersten Dateneinheiten über ausschließlich ein Datenübertragungsmedium zu übertragen (106) und die zweite Instanz der ersten Dateneinheiten über ausschließlich das jeweils andere Datenübertragungsmedium zu übertragen (107) und ferner die zweiten kodierten Dateneinheiten über ein wahlweises der beiden Datenübertragungsmedien an die Empfangsvorrichtung zu übertragen (108).

14. Computerprogrammprodukt, umfassend Befehle, die bei der Ausführung des Programms durch mindestens einen Computer diesen veranlassen, die Schritte des Verfahrens nach Anspruch 13 auszuführen.

15. Computerlesbares Speichermedium, umfassend Befehle, die bei der Ausführung durch mindestens einen Computer diesen veranlassen, die Schritte des Verfahrens nach Anspruch 13 auszuführen.
